# FASCICULE DE BREVET EUROPEEN

(11) **EP 1 060 058 B1**
(45) Date de publication et mention de la délivrance du brevet: **30.01.2002**
(21) Numéro de dépôt: 99903766.6
(22) Date de dépôt: 16.02.1999
(51) Int. Cl.: B26F 1/02, B42B 5/10

(54) **MACHINE POUR PERFORER ET RELIER DES FEUILLES**
VORRICHTUNG ZUM LOCHEN UND BINDEN VON BÖGEN
MACHINE FOR PERFORATING AND BINDING SHEETS

(30) Priorité: 19.02.1998 FR 9802235
(43) Date de publication de la demande: 20.12.2000
(73) Titulaire: Fellowes France, 35510 Cesson-Sevigne (FR)
(72) Inventeur: SOULE, Pierre, F-35000 Rennes (FR)
(74) Mandataire: Branger, Jean-Yves
(86) Numéro de dépôt international: FR9900340
(87) Numéro de publication internationale: WO9942261

(56) Documents cités:
- BE-A- 868 128
- DE-A- 2 430 004
- DE-C- 689 631
- US-A- 4 008 501
- US-A- 4 833 958
- US-A- 5 183 361

## Description

La présente invention concerne une machine pour perforer et relier des feuilles du type selon le préambule de la revendication 1.

Elle est particulièrement mais non exclusivement destinée à un usage professionnel.

Des machines de perforation de feuilles, destinées normalement à une utilisation occasionnelle, sont couramment répandues. Il s'agit de machines simples, permettant de réaliser une forme déterminée de perforations, par exemple rectangulaires, selon un écartement préétabli entre trous.

Dès lors que l'on souhaite réaliser un type différent de perforations, par exemple carrées, il est nécessaire d'avoir recours à une autre machine. Cela entraîne bien entendu des frais supplémentaires et l'usage de plusieurs machines nécessite de disposer d'un espace important.

De plus, pour relier les feuilles entre elles, par exemple à l'aide d'une reliure à peigne ou hélicoïdale en métal, on doit utiliser une machine supplémentaire indépendante.

C'est notamment la raison pour laquelle on a proposé des machines compactes intégrant à la fois des systèmes de perforation et de reliure. Toutefois, de telles machines sont spécifiques à un type particulier de perforations.

Ainsi, on décrit dans le document DE-C-689 631 un appareil qui comporte à la fois des moyens de perforation de feuilles et des moyens de reliure.

Seule la pièce dans laquelle est reçue la reliure en vue de sa fermeture sur les feuilles, est interchangeable. Malgré cela, l'appareil reste limité à la reliure de documents à l'aide d'éléments en forme de crochets métalliques. En tout état de cause, les moyens de perforation et de reliure, ne sont pas, dans leur ensemble, prévus amovibles et interchangeables.

On décrit dans le document DE-A-2 430 004 une machine pour perforer des feuilles, dans laquelle l'ensemble formé par une plaque de guidage des feuilles, un guide de poinçons et les poinçons eux-mêmes, est prévu amovible.

D'autres machines comportent un système de perforation interchangeable, couplé à un système de reliure spécifique.

Là encore, dès lors que l'on souhaite utiliser des reliures de type différent, il est nécessaire de disposer de plusieurs machines.

La présente invention a pour but de résoudre ces problèmes en proposant une machine complètement polyvalente, c'est-à-dire susceptible de fonctionner avec des types de perforation, des écartements entre perforations et des reliures différents.

Un autre objectif de l'invention est de proposer une machine qui puisse permettre de relier sans difficulté des épaisseurs de feuilles diverses et variées.

Encore un autre but de l'invention est de fournir une machine robuste et simple à utiliser.

Cette machine, pour perforer et relier des feuilles, qui comprend des premiers moyens de perforation ayant la forme d'un bloc indépendant, amovible et interchangeable et des seconds moyens de reliure, se caractérise par le fait les seconds moyens ont également la forme d'un bloc indépendant, amovible et interchangeable, que le bloc de perforation est équipé de moyens de réglage de la hauteur de marge des feuilles, c'est à dire de l'écartement entre la ligne de perforations et le bord parallèle le plus proche, et qu'elle comprend un socle équipé d'une cloison transversale approximativement verticale contre laquelle est placé ledit bloc de perforation, tandis que des moyens moteurs sont prévus du côté opposé de la cloison, celle-ci présentant des ouvertures pour le passage d'éléments de transfert de mouvement entre les moyens moteurs et le bloc de perforation.

Ainsi, la même machine peut recevoir, sous la forme de blocs indépendants, des systèmes de perforation et de reliure différents, permettant de réaliser de multiples combinaisons d'assemblage.

De plus, du fait que le bloc de perforation intègre des moyens de réglage de hauteur de marge, il est possible de relier des paquets de feuilles perforées d'épaisseurs variées.

Il intègre par ailleurs les moyens de réception des poinçons de perforation, de sorte que, d'un bloc à l'autre, il est possible de disposer de formes et de tailles de poinçons différents.

Le coût d'achat de la machine et de ses différents blocs est nécessairement inférieur à celui de plusieurs machines conformes à l'état de la technique. Par ailleurs, l'espace occupé par cette machine et ses blocs de "rechange" est moins important que celui employé par le nombre correspondant de machines connues à usage limité.

Par ailleurs, selon d'autres caractéristiques avantageuses mais non limitatives de l'invention :
- ladite cloison constitue une surface d'appui pour des feuilles à perforer ;
- l'une des faces du bloc de perforation, dite face avant, comporte des ouvertures de réception pour des organes d'accrochage complémentaires prévus sur l'une des faces, dite face arrière, du bloc de reliure ;
- l'une des faces du bloc de reliure, dite face avant, comporte des ouvertures de réception pour des organes d'accrochage complémentaires prévus sur la face arrière d'une tablette ;
- le bloc de perforation comporte une série de poinçons dont au moins une partie est prévue débrayable ;
- lesdits moyens de réglage de la hauteur de marge comprennent un bouton d'actionnement formant saillie sur une face latérale du bloc de perforation ;
- ledit bouton est solidaire d'un axe rotatif équipé d'au moins une patte radiale, l'actionnement de l'axe provoquant, via la patte radiale, le déplacement en translation de moyens de support de feuilles.

D'autres caractéristiques et avantages de l'invention apparaîtront à la lecture de la description détaillée qui va suivre d'un mode de réalisation préférentiel. Cette description sera faite en référence aux dessins annexés dans lesquels :
- la figure 1 est une vue en perspective de la machine de l'invention, équipée de blocs de perforation et de reliure, ainsi que d'une tablette ;
- la figure 2 est également une vue en perspective de la machine de la figure 1, mais selon une direction opposée, celle-ci étant dépourvue des blocs de perforation et de reliure et du carter de protection de ses moyens-moteurs ;
- la figure 3 est une vue en perspective d'un bloc de perforation ;
- la figure 4 est également une vue en perspective du bloc de la figure 1, mais selon une direction opposée ;
- la figure 5 est une vue en perspective d'un bloc de reliure ;
- les figures 6 et 7 sont des vues, selon un plan de coupe vertical et longitudinal, du bloc de perforation de la figure 4, destinées à montrer des positionnements possibles des moyens de réglage de hauteur de marge ;
- la figure 8 est une vue partielle de face d'une feuille perforée à l'aide d'une machine conforme à l'invention ;
- les figures 9 et 10 sont des vues du bloc de la figure 4, selon les plans de coupe IX-IX et X-X des figures 6 et 7 ;
- les figures 11A, 11B et 11C sont des vues partielles de blocs de feuilles perforées, assemblées à l'aide de différents types de reliure ;
- les figures 12 à 14 sont des schémas simplifiés des éléments de perforation du bloc de perforation correspondant, sur lesquels on a montré le déplacement des différentes pièces en mouvement selon le positionnement de poinçons débrayables.

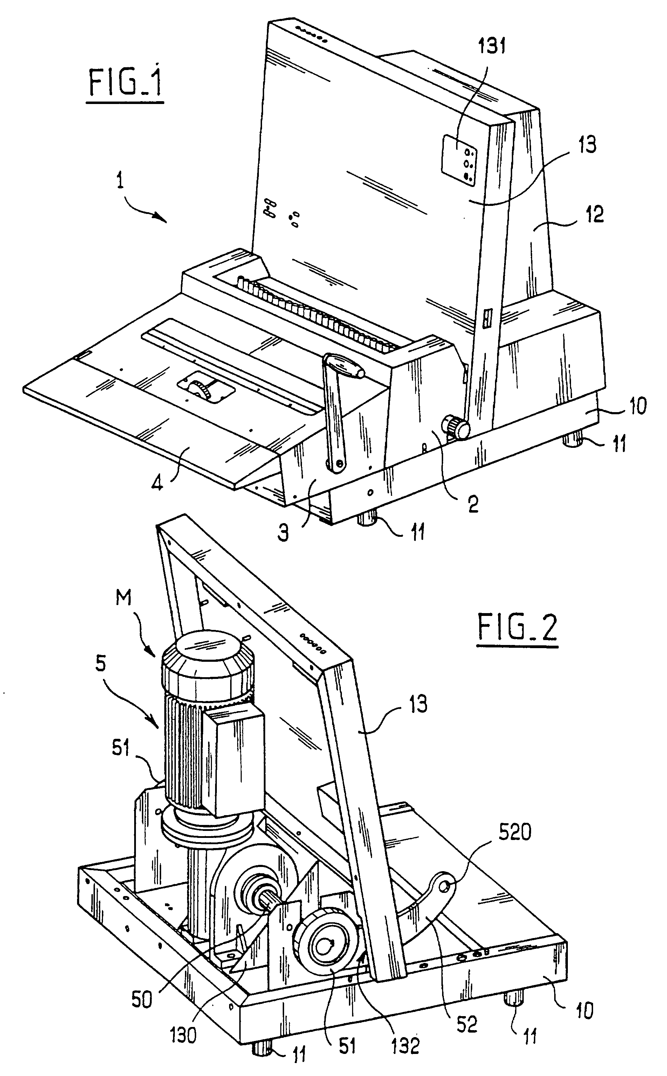

La machine pour perforer et relier des feuilles conforme à l'invention, et plus particulièrement visible à la figure 1, comporte essentiellement un socle 10 avec une cloison transversale 13. Des moyens moteurs 5 prennent place d'un côté de la cloison, tandis que le côté opposé reçoit des blocs 2 et 3 de perforation et de reliure, ainsi qu'une tablette 4.

Le socle 10 est un socle métallique et rectangulaire qui comporte, au voisinage de ses quatre angles, des pattes d'appui en caoutchouc 11.

Sensiblement à mi-longueur est fixé sur ce socle une cloison 13. Cette cloison s'étend transversalement par rapport à la machine et selon une direction approximativement verticale. La stabilité de cette cloison est notamment assurée par des pièces de renfort triangulaires 130 qui prennent appui sur le socle.

Des moyens moteurs 5 sont disposés à l'arrière de la cloison. Ils comprennent un moteur **M**, par exemple électrique, d'axe vertical qui entraîne, via des moyens de renvois adéquats et non représentés, un arbre transversal et horizontal 50. Le moteur est placé sensiblement au milieu de la machine et l'arbre 50 s'étend de part et d'autre de ce dernier en direction des deux bords opposés du socle.

Aux extrémités opposées de l'arbre sont prévus des excentriques 51 qui coopèrent chacun avec une bielle coudée 52 à extrémité relevée. Les deux bielles, disposées dans des plans verticaux parallèles s'étendent longitudinalement vers l'avant de la machine et passent à travers des ouvertures 132 ménagées à cet effet dans la cloison 13. L'extrémité libre et relevée de chaque bielle, opposée à l'excentrique 51, porte une ouverture transversale 520 pour le passage d'un axe, comme on le verra plus loin.

Il est bien évident que le mouvement de rotation de l'arbre de sortie 50 du moteur **M** se traduit, du fait de la présence d'excentriques 51, par un mouvement longitudinal de va-et-vient des bielles 52. On expliquera plus loin la fonction d'un tel mouvement.

Sur la face avant de la cloison 13 est prévu un petit tableau de commande 131 qui permet, par exemple par un système de touches sensitives, d'activer ou non le moteur **M** et, par son intermédiaire, le couple de biellettes 52. On notera que, en fonctionnement normal de la machine, les moyens moteurs 5 sont recouverts par un capot métallique 12. Il peut d'ailleurs être prévu des moyens de sécurité qui font que le moteur **M** ne peut pas être mis en route tant qu'il n'est pas protégé par le capot précité.

Comme déjà expliqué plus haut, le socle 10 est également destiné à recevoir des moyens de perforation et de reliures de feuilles, sous la forme de blocs amovibles et interchangeables.

Ainsi, un bloc de perforation 2 est destiné à venir en place sur le socle contre la face avant de la cloison transversale 13.

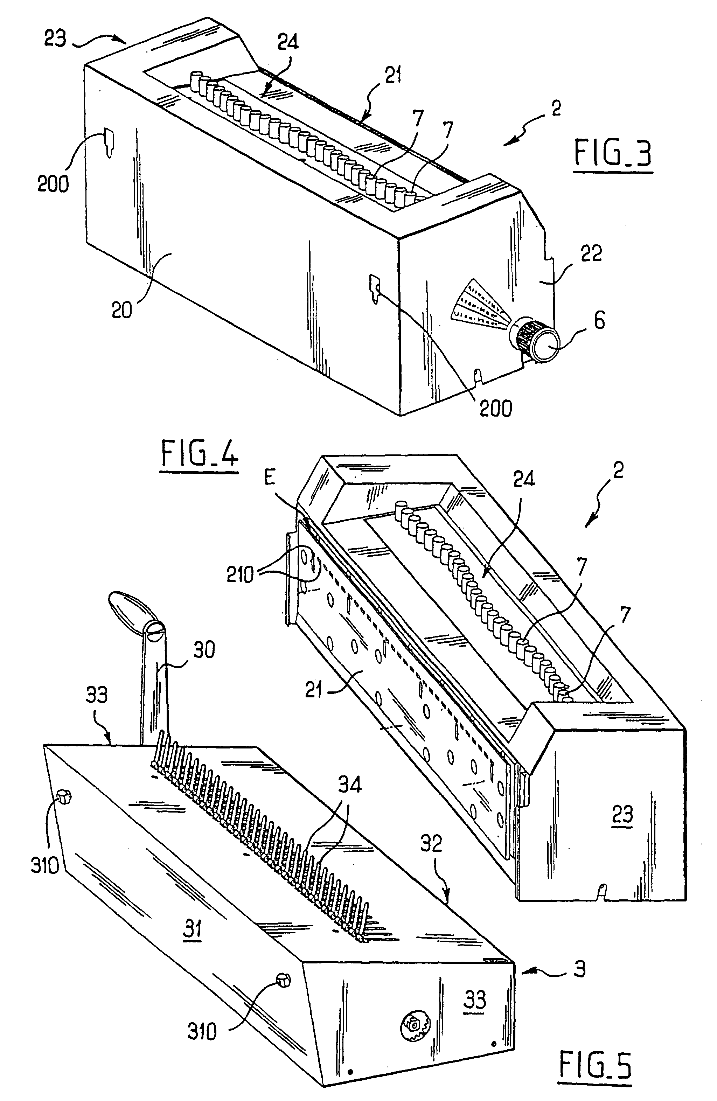

Le bloc 2, plus particulièrement visible aux figures 3 et 4 s'inscrit sensiblement dans un parallélépipède allongé, avec des grandes faces approximativement verticales avant 20 et arrière 21 destinées à s'étendre transversalement sur la machine. La face 20 fait partie intégrante d'un capot de protection du bloc, tandis que la paroi opposée 21 constitue une partie active du bloc dans laquelle sont ménagées des ouvertures 210, disposées selon une ligne horizontale pour la perforation de feuilles.

Dans la face avant 20 sont prévues des ouvertures de réception 200 d'organes complémentaires prévues sur la face arrière d'un bloc de reliure que l'on décrira plus loin.

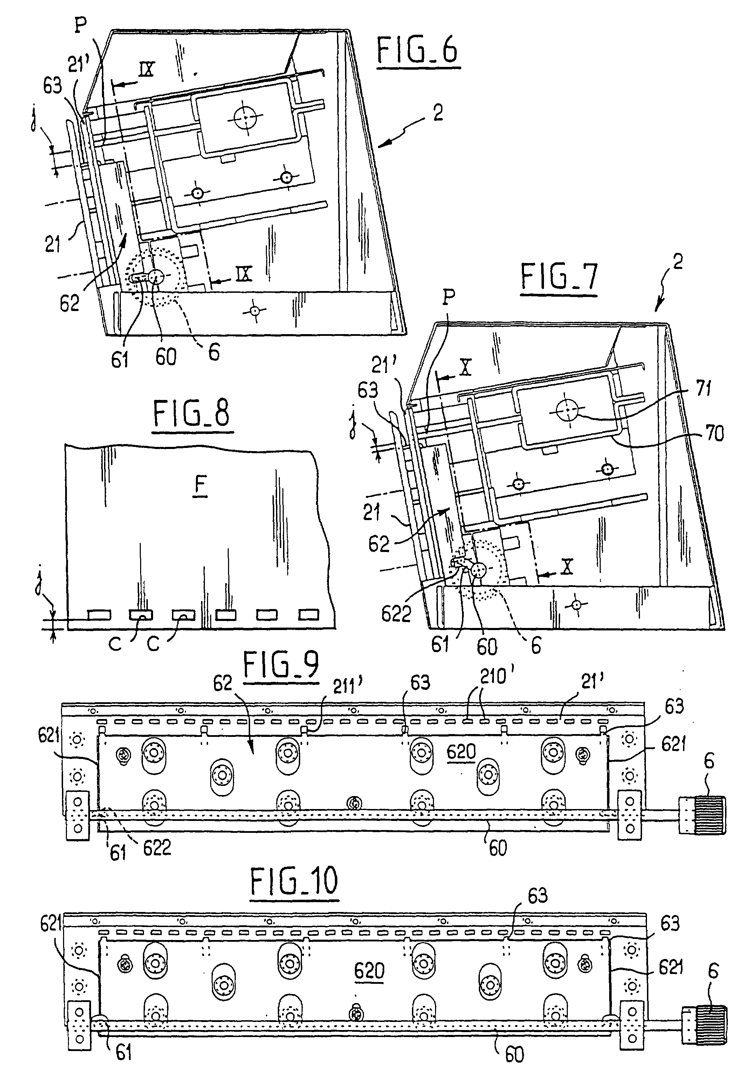

Comme le montrent les figures 6 et 7, la plaque 21 formant face arrière s'étend parallèlement à une plaque parallèle 21', également traversée par des ouvertures de perforation 210', disposées en regard des précédentes 210. L'espace **E** ménagé entre ces plaques est suffisant pour permettre d'insérer entre elles un paquet de feuilles à perforer.

Contre la face interne de la plaque 21 s'applique la base 620 d'un profilé en "U" 62 dont les deux ailes parallèles 621 s'étendent dans un plan vertical et longitudinal. En partie basse de ces ailes est prévue une petite découpure longitudinale 622 qui débouche au niveau de leur extrémité libre.

Enfin, le bord supérieur de la base 620 du profilé est pourvu de petites pattes 63 recourbées à 90° vers l'avant, qui traversent des ouvertures 211' prévues dans la plaque 21'. Ces petites pattes s'étendent approximativement contre la face interne de la plaque extérieure 21. Ainsi, lorsque des feuilles sont introduites dans l'espace **E** précité, l'ensemble des petites pattes 63 constitue un socle d'appui pour ces dernières.

Le bloc 2 renferme également un axe transversal 6 qui s'étend horizontalement et est guidé en rotation sur lui-même de manière adéquate. Il ressort au-delà d'une face latérale 22 du bloc et comporte à ce niveau un bouton moleté de manoeuvre 6. L'axe 60 est pourvu de deux petites pattes radiales 61 qui s'étendent en regard des ailes 621 du profilé 62. Plus précisément, ces pattes sont engagées dans les deux découpures 622 précitées.

On comprend aisément, en référence aux figures 6 et 7, qu'en manoeuvrant le bouton 6 en rotation, on déplace à volonté, dans le sens de la hauteur, le profilé 62. De ce fait, il est possible de régler la distance **j** entre les pattes 63 et les perforations 210 et 210' des plaques 21 et 21' qui sont destinées à être traversées par les poinçons **P** du bloc de perforation.

En référence à la figure 8, on a représenté partiellement une feuille **F** qui a été perforée. Les perforations, référencées **C**, sont réparties sous la forme d'une ligne parallèle à un bord de la feuille. Sur cette feuille, la distance **j** précitée matérialise ce que l'on appelle la hauteur de marge, c'est-à-dire la distance qui sépare la ligne de perforations **C** du bord parallèle le plus proche.

De cette façon, si l'on a à perforer et à relier un nombre de feuilles très important, on va devoir éloigner au maximum la ligne de perforation du bord parallèle correspondant de manière à pouvoir accueillir une reliure de diamètre adéquat.

Conformément à l'invention, chaque bloc de perforation 2 susceptible d'être utilisé avec la machine, comporte ses propres moyens de réglage de hauteur de marge.

De manière connue en soi, la machine comporte des moyens de perforations à poinçons **P** débrayables.

Ainsi, les poinçons **P**, disposés transversalement et horizontalement selon une ligne, sont associés à un organe coulissant 70 traversé par un axe transversal 71 dont les extrémités sont en prise avec les bielles 52 dont il a été fait état plus haut. De plus, chaque poinçon est associé à une tige débrayable 7, qui peut être enlevé par la face supérieure 24 du bloc de perforation, par un mouvement de translation verticale.

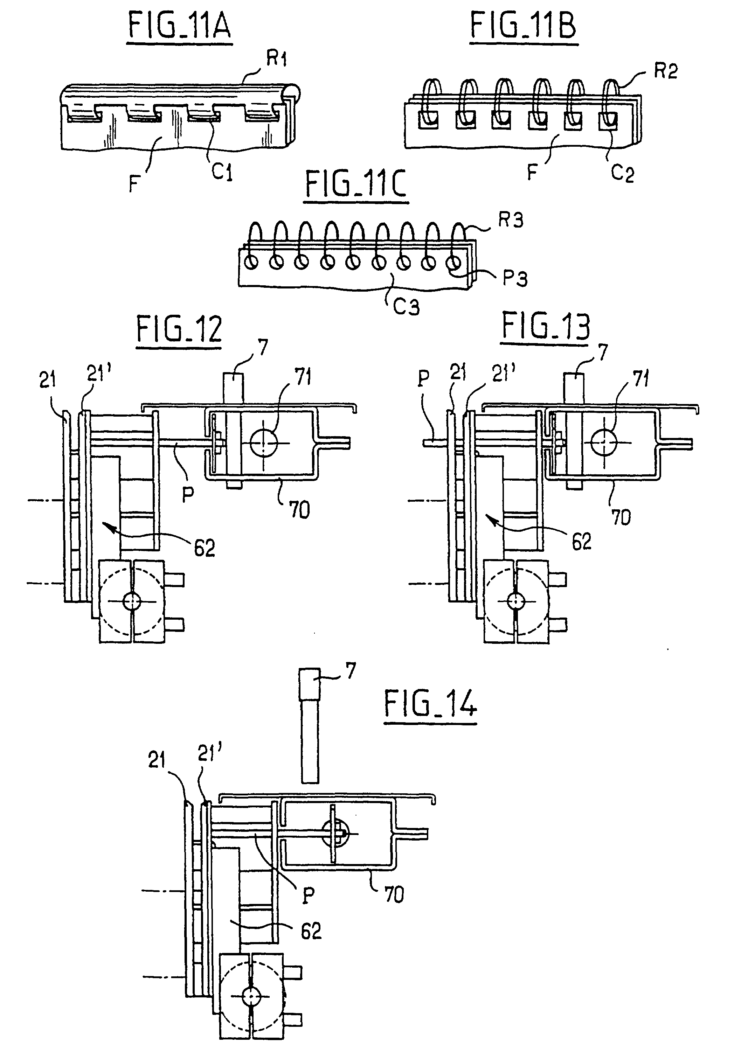

Ainsi qu'on le comprend à l'examen des figures 12 à 14, dans la mesure où les tiges sont en place sur le bloc, la translation de la pièce 70, via le mouvement de va-et-vient des bielles 52 provoque le déplacement de chacun des poinçons **P** à travers les plaques 21 et 21', de sorte que les feuilles sont perforées.

Toutefois, lorsqu'une tige 7 (voir figure 14) est enlevée, le poinçon correspondant n'est pas déplacé, de sorte que celui-ci devient inactif.

Les moyens de reliure de feuilles, utilisable avec la machine selon l'invention, sont également prévus sont la forme de blocs 3 amovibles et interchangeables.

Les figures 1 et 5 représentent deux types de blocs dont la structure est connue en soi.

Ainsi, le bloc de la figure 5, dont la face arrière 31 porte des tétons destinés à être engagés dans les ouvertures complémentaires 200 du bloc de perforation 2, est à fonctionnement manuel.

Il comporte sur sa face supérieure des doigts 34 destinés, en l'occurrence, à recevoir une reliure à peigne. En regard de ces pattes 34 sont prévus de petits crochets, qui, par basculement de la poignée de manoeuvre 30, sont déplacés en translation pour s'écarter progressivement des pattes 34.

Ce qui vient d'être décrit est un bloc de reliure destiné à recevoir des reliures à peigne. Toutefois, il est bien entendu que si la reliure à utiliser est d'un autre type, par exemple une reliure hélicoïdale, alors on mettra en place sur la machine le bloc adéquat.

De manière facultative, le bloc 3 peut recevoir, du côté de sa face avant, une tablette 4, pour la réception de documents à relier.

Il en est bien sûr de même pour les blocs de perforation dont les perforations C peuvent avoir des formes distinctes.

Ainsi, on a représenté aux figures 11A à 11C des assemblages de feuilles **F** qui comportent respectivement des perforations **C**_{**1**}, rectangulaires, **C**_{**2**} carrés ou **C**_{**3**} circulaires. Ces perforations sont donc réalisées sur la même machine mais avec des blocs 2 distincts.

Ces différents types de perforation sont chacun adaptés pour recevoir une reliure différente. En l'occurrence, il s'agit d'une reliure **R**_{**1**} à peigne, **R**_{**2**} à boucles métalliques en forme de "C", et **R**_{**3**} hélicoïdale.

En plus de sa compacité, la machine selon l'invention présente donc l'intérêt de recevoir des blocs de perforation et de reliure amovibles et interchangeables qui sont susceptibles de s'adapter à n'importe quel type d'assemblage que l'on souhaite réaliser.

## Revendications

1. Machine pour perforer et relier des feuilles (F), qui comprend des premiers moyens de perforation ayant la forme d'un bloc (2) indépendant, amovible et interchangeable et des seconds moyens de reliure, **caractérisée par le fait que** les seconds moyens ont également la forme d'un bloc indépendant (3), amovible et interchangeable, que le bloc de perforation (2) est équipé de moyens de réglage (60 - 63) de la hauteur de marge des feuilles (F), c'est à dire de l'écartement entre la ligne de perforations (P) et le bord parallèle le plus proche, et qu'elle comprend un socle (10) équipé d'une cloison transversale (13) approximativement verticale contre laquelle est placé ledit bloc de perforation (2), tandis que des moyens moteurs (5) sont prévus du côté opposé de la cloison, celle-ci présentant des ouvertures pour le passage d'éléments (52) de transfert de mouvement entre les moyens moteurs (5) et le bloc de perforation (2).

2. Machine selon la revendication 1, **caractérisée par le fait que** ladite cloison (13) constitue une surface d'appui pour des feuilles à perforer (F).

3. Machine selon l'une des revendications 1 ou 2, **caractérisée par le fait que** l'une des faces du bloc de perforation (2), dite face avant (20), comporte des ouvertures (200) de réception pour des organes d'accrochage complémentaires (310) prévus sur la face arrière (31) du bloc de reliure (3).

4. Machine selon l'une des revendications 1 à 3, **caractérisée par le fait que** l'une des faces du bloc de reliure (3), dite face avant (32), comporte des ouvertures de réception pour des organes d'accrochage complémentaires prévus sur la face arrière d'une tablette (4).

5. Machine selon l'une des revendications 1 à 4, **caractérisée par le fait que** le bloc de perforation (2) comporte une série de poinçons dont au moins une partie est prévue débrayable.

6. Machine selon l'une des revendications 1 à 5, **caractérisée par le fait que** lesdits moyens de réglage de la hauteur de marge comprennent un bouton d'actionnement (6) formant saillie sur une face latérale (22) du bloc de perforation (2).

7. Machine selon la revendication 6, **caractérisée par le fait que** ledit bouton (6) est solidaire d'un axe rotatif (60) équipé d'au moins une patte radiale (61), l'actionnement de l'axe provoquant, via la patte radiale, le déplacement en translation de moyens de support (63) de feuilles (F).

## Patentansprüche

1. Vorrichtung zum Lochen und Binden von Bögen (F), die erste Mittel für das Lochen in Form eines unabhängigen abnehmbaren und austauschbaren Blockes (2) aufweist, sowie zweite Mitteln für das Binden enthält,
**dadurch gekennzeichnet, dass**
diese zweiten Mittel ebenfalls die Form eines unabhängigen abnehmbaren und austauschbaren Blockes (3) haben, und dass der Block (2) für das Lochen mit Mitteln (60 - 63) für die Regulierung der Höhe des Randbereiches der Bögen (F), das heißt, des Abstands zwischen der Lochungslinie (P) und dem am nächsten liegenden parallelen Rand ausgestattet ist, und dass sie einen Sockel (10) mit einer weitgehend senkrecht verlaufenden Querwand (13) aufweist, an die der Block (2) für das Lochen geschoben wird, und dass Antriebsmittel (5) an der gegenüberliegenden Seite der Wand vorgesehen sind, und dass diese Wand mit Öffnungen für den Durchgang von Elementen (52) für die Übertragung der Bewegung zwischen den Antriebsmitteln (5) und dem Block (2) für das Lochen versehen ist.

2. Vorrichtung nach Anspruch 1,
**dadurch gekennzeichnet, dass**
die Wand (13) eine Auflagefläche für die zu lochenden Bögen (F) bildet.

3. Vorrichtung nach einem der Ansprüche 1 oder 2,
**dadurch gekennzeichnet, dass**
eine Fläche des Blockes (2) für das Lochen, die sogenannte Vorderfläche (20), Öffnungen (200) für die Aufnahme von ergänzenden Befestigungsorganen (310) aufweist, die auf der Rückseite (31) des Blockes (3) für das Binden angeordnet sind.

4. Vorrichtung nach einem der Ansprüche 1 bis 3,
**dadurch gekennzeichnet, dass**
eine Fläche des Blockes (3) für das Binden, die sogenannte Vorderfläche (32), Öffnungen für die Aufnahme von ergänzenden Befestigungsorganen aufweist, die auf der Rückseite eines Tabletts (4) angeordnet sind.

5. Vorrichtung nach einem der Ansprüche 1 bis 4,
**dadurch gekennzeichnet, dass**
der Block (2) für das Lochen eine Reihe von Lochstempeln aufweist, von denen mindestens ein Teil ausgekuppelt werden kann.

6. Vorrichtung nach einem der Ansprüche 1 bis 5,
**dadurch gekennzeichnet, dass**
die Mittel für die Regulierung der Höhe des Randbereiches einen Betätigungsknopf (6) aufweisen, der aus einer Seitenfläche (22) des Blockes (2) für das Lochen hervorsteht.

7. Vorrichtung nach Anspruch 6,
**dadurch gekennzeichnet, dass**
der Betätigungsknopf (6) mit einer Drehachse (60) verbunden ist, die mit mindestens einer radialen Klaue (61) für die Betätigung der Achse ausgerüstet ist, und dass mit Hilfe dieser Klaue die seitliche Verschiebung der Mittel (63) für die Auflage der Bögen (F) bewirkt wird.

## Claims

1. A machine for punching and binding sheets (F), the machine comprising first means for punching, in the form of a block (2) that is independent, removable, and interchangeable, and second means for binding, and being **characterized by** the facts that the second means are also in the form of a block (2, 3) that is independent, removable, and interchangeable, and that the punch block (2) is fitted with means (60-63) for adjusting the size of the margin of the sheets (F), i.e. the spacing between the line of holes (P) and the nearest parallel edge, and by the fact that it comprises a base (10) fitted with an approximately vertical transverse partition (13) against which said punch block (2) is placed, while motor means (5) are provided on the opposite side of the partition, which partition has openings through which motion-transferring elements (52) pass between the motor means (5) and the punch block (2).

2. A machine according to claim 1, **characterized by** the fact that said partition (13) constitutes a bearing surface for the sheets (F) to be punched.

3. A machine according to claim 1 or 2, **characterized by** the fact that one of the faces of the punch blocks (2), referred to as a "front" face (20), has openings (200) for receiving complementary engagement means (310) provided on the rear face (31) of the binding block (3).

4. A machine according to any one of claims 1 to 3, **characterized by** the fact that one of the faces of the binding block (3), referred to as a "front" face (32), has openings for receiving complementary engagement members provided on the rear face of a sill (4).

5. A machine according to any one of claims 1 to 4, **characterized by** the fact that the punch block (2) has a series of punches, at least some of which are designed to be declutchable.

6. A machine according to any one of claims 1 to 5, **characterized by** the fact that said means for adjusting the size of the margin include an actuator knob (6) projecting from a side face (22) of the punch block (2).

7. A machine according to claim 6, **characterized by** the fact that said knob (6) is secured to a rotary pin (60) fitted with at least one radial tab (61) with actuation of the pin acting via the radial tab to move in translation the support means (63) for sheets (F).
